(19) Europäisches Patentamt
European Patent Office
Office européen des brevets

(11) Numéro de publication : **0 453 350 A1**

(12) # DEMANDE DE BREVET EUROPEEN

(21) Numéro de dépôt : **91400936.0**

(51) Int. Cl.$^5$ : **C08G 79/08**, C04B 35/58

(22) Date de dépôt : **08.04.91**

(30) Priorité : **20.04.90 FR 9005294**

(43) Date de publication de la demande :
**23.10.91 Bulletin 91/43**

(84) Etats contractants désignés :
**AT BE CH DE DK ES FR GB GR IT LI LU NL SE**

(71) Demandeur : **RHONE-POULENC CHIMIE**
**25, quai Paul Doumer**
**F-92408 Courbevoie Cédex (FR)**

(72) Inventeur : **Ardaud, Pierre**
**133, avenue Clémenceau**
**F-69110 Sainte-Foys-les-Lyon (FR)**
Inventeur : **Desrayaud, Jacques**
**13, rue Jean Peyri**
**F-69120 Vaulx en Velin (FR)**
Inventeur : **Mignani, Gérard**
**2, avenue des frères Lumière**
**F-69008 Lyon (FR)**

(74) Mandataire : **Dubruc, Philippe et al**
**RHONE-POULENC CHIMIE Service Brevets Chimie 25, quai Paul-Doumer**
**F-92408 Courbevoie Cédex (FR)**

(54) **Procédé de réticulation de polymères à base de bore et d'azote, notamment pour l'obtention de fibres céramiques.**

(57) Procédé de réticulation de polymère à base de bore et d'azote, procédé caractérisé en ce que ledit polymère (A) contenant par molécule au moins un motif choisi parmi les formules :

$$=N\text{-}SiR^1_3 \quad (1)$$

et

$$-NH- \quad (2),$$

formules dans lesquelles $R^1$, identique ou différent, représente un radical hydrocarboné, est mis en contact avec une quantité efficace de composé (B) choisi parmi les produits présentant par molécule au moins un atome de bore sur lequel sont liés directement au moins deux atomes d'halogène et les produits ayant pour formule générale (3) : $(BX - NR)_n$, formule (3) dans laquelle l'indice n est un entier compris entre 3 et 10, de préférence n est égal à 3, R represente l'atome d'hydrogène, un radical hydrocarboné, un radical organosilylé hydrogénoorganosilylé et X représente un atome d'halogène.

EP 0 453 350 A1

Jouve, 18, rue Saint-Denis, 75001 PARIS

La présente invention concerne un procédé de réticulation de polymères à base de bore et d'azote.

Elle concerne également, à titre d'application, l'utilisation de ces polymères pour la fabrication de produits et articles céramiques à base de nitrure de bore, notamment sous formes de fibres, de pellicules, de matrices, de revêtements, de poudres et de pièces massives.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connaît à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives.

Plus récemment, on a découvert qu'il était également possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres ou de films en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970°C, à des fibres de nitrure de bore.

Le rendement pondéral maximal en nitrure de bore susceptible d'être obtenu avec ce type de produit ne dépasse pas 22 %, ce qui signifie, à priori, des rendements réels bien inférieurs à cette valeur.

Il est souhaitable et c'est un but de la présente invention de pouvoir disposer facilement d'un polymère à base de bore, d'azote et éventuellement de silicium qui soit assez stable à l'hydrolyse et surtout qui conduise, après pyrolyse, au matériau céramique avec un rendement pondéral élevé. Il est nécessaire pour cela que le polymère présente lors de la pyrolyse une tenue thermique qui peut être apportée par un haut poids moléculaire et/ou une viscosité élevée allant jusqu'à l'état solide.

On a maintenant trouvé que ce but et d'autres peuvent être atteints au moyen de la présente invention qui concerne en effet un procédé de réticulation de polymère à base de bore et d'azote, procédé caractérisé en ce que ledit polymère (A) contenant par molécule au moins un motif choisi parmi les formules :

$$=N\text{-}SiR^1{}_3 \quad (1)$$

et

$$-NH- \quad (2),$$

formules dans lesquelles $R^1$, identique ou différent, représente un radical hydrocarboné, est mis en contact avec une quantité efficace de composé (B) choisi parmi les produits présentant par molécule au moins un atome de bore sur lequel sont liés directement au moins deux atomes d'halogène et les produits ayant pour formule générale (3) : $(BX\text{-}NR)_n$, formule (3) dans laquelle l'indice n est un entier compris entre 3 et 10, de préférence n est égal à 3, R représente l'atome d'hydrogène, un radical hydrocarboné, un radical organosilylé ou hydrogénoorganosilylé et X représente un atome d'halogène.

De préférence, l'atome d'halogène présent dans le composé (B) est le chlore.

Le polymère (A) à base de bore et d'azote contenant au moins un motif de formule (1) $=N\text{-}Si\text{-}R^1{}_3$, par molécule, peut notamment être obtenu par les procédés décrits dans :

– le brevet FR-A-2 620 443 déposé au nom de la Demanderesse,

– le brevet FR-A-2 637 602 déposé au nom de la Demanderesse, le procédé consistant à introduire progressivement, en maintenant le milieu réactionnel à une température comprise entre environ - 100°C et 0°C, un composé silazane présentant au moins un groupement ≡Si-NH-Si≡ en excès dans un trihalogénoborane.

– le brevet FR-A-2 645 869 déposé au nom de la Demanderesse, le procédé consistant à faire réagir au moins un trihalogénoborane (trichloroborane) avec un excès molaire d'au moins un composé silazane présentant au moins un groupement ≡Si-NH-Si≡ (disilazane) à température ambiante.

On peut également utiliser le polymère obtenu par le procédé décrit dans le brevet FR-A-2 650 832 déposé au nom de la Demanderesse, le procédé comportant la réaction d'un mélange de trihalogénoborane, de préférence trichlorure de bore, de disilazane, de préférence hexaméthyldisilazane et de B-trichloroborazine.

Le polymère (A) contenant par molécule au moins un motif de formule (2) : -NH- peut notamment être obtenu par le procédé décrit dans le brevet FR-A-2 643 358 déposé au nom de la Demanderesse, procédé consistant à faire réagir au moins un B-trihalogénoborazole de formule :

$$\left[(BX - NH)_3\right]$$

avec au moins une amine primaire de formule : $H_2N\text{-}R$, formules dans lesquelles X représente un halogène et R un radical hydrocarboné, éventuellement substitué, contenant inclusivement entre 1 et 6 atomes de carbone.

Si au moins un des produits de départ des procédés suivants contient une des deux formules (1) =N-SiR13 ou (2) -NH-, on peut également utiliser les polymères obtenus selon les procédés décrits dans :

– les brevets FR-A-2 620 454, FR-A-2 620 455 et FR-A-2 629 463 déposés au nom de la Demanderesse,

– le brevet FR-A-2 637 603 déposé au nom de la Demanderesse, les polymères étant obtenus notamment en faisant réagir

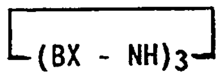 ,

$Cl_2B-N(SiMe_3)_2$ et un composé présentant au moins un groupement $NH_2$.

Il est également possible d'utiliser, comme polymère (A), les produits décrits dans les brevets US 4 581 468, US 4 707 556 et EP-A-0 305 985.

Lorsque le composé (B) est choisi parmi les produits présentant par molécule au moins un atome de bore sur lequel sont liés directement au moins deux atomes d'halogène, il répond de préférence à la formule (4) suivante :

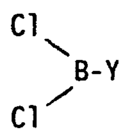 (4)

dans laquelle Y représente

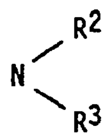 ,

les radicaux $R^2$ et $R^3$, identiques ou différents, étant choisis parmi l'atome d'hydrogène, les radicaux hydrocarbonés et les radicaux organosilylés et hydrogénoorganosilylés.

Lorsque le composé (B) est choisi parmi les produits de formule générale (3), formule décrite ci-dessus, il correspond de préférence aux produits de formule (3) dans laquelle R est l'hydrogène. On utilise ainsi plus particulièrement la B-trichloroborazine :

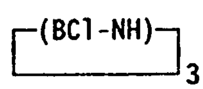

De façon générale dans les formules (3) et (4), les radicaux hydrocarbonés les plus usités dans la présente invention sont les radicaux alkyles, cycloalkyles, aryles, alkylaryles et arylalkyles ainsi que les radicaux alcényles et alcynyles.

Parmi les radicaux alkyles convenant pour la présente invention, on peut citer à titre d'exemples les radicaux méthyle, éthyle, propyle, butyle, pentyle,hexyle, heptyle et octyle. Parmi les radicaux cycloalkyls, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux arylalkyles : les radicaux benzyle et phényléthyle.

A titre de radicaux alcényles, on peut citer plus particulièrement les radicaux vinyle, allyle, butényle et pentényle.

Enfin, on peut citer comme radicaux alcynyle, les radicaux éthynyle, propynyle et butynyle.

Les radicaux organosilylés ou hydrogénoorganosilylés sont plus particulièrement des radicaux (triorgano)silylés ou (hydrogénodiorgano)silylés. De préférence, on utilise des radicaux (trialkyl)silylés, tels que notamment les radicaux triméthyl, triéthyl, tripropyl, tributyl, tripentyl, trihexyl, triheptyl et trioctyl-silylés. Les radicaux (triméthyl)silylés conviennent particulièrement bien.

Les composés de formule (3) et (4) ci-dessus sont bien connus de l'état de la technique, et peuvent être préparés par tout moyen connu en soi.

En ce qui concerne les produits de formule (3), ils peuvent notamment être obtenus par thermolyse dans du xylène à reflux ou phase vapeur, des composés correspondants du type :

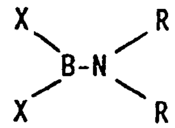

(R et X ayant les significations données ci-dessus) et selon des modalités telles que déjà décrites dans la littérature (voir par exemple R.L. WELLS dans Inorg. Chemistry, 2, (1963), 29 ainsi que P. GEYMAYER dans Monatsh, 97, (1966), 429). Ces derniers composés sont également bien connus de l'homme de l'art (formule (4)).

En effet, en ce qui concerne le composé de formule (4), lorsque les radicaux $R^2$ et $R^3$ sont de type alkyles, on pourra se référer notamment aux travaux de WILBERG et SCHUSTER (Anorganic Chemistrie, 1933, 213, page 77), de BROWN (Journal of American Chemical Society, 1952, 74, page 219), ou bien encore de BURG et BANUS (Journal of American Society, 1954, 76, page 3903).

Lorsque les radicaux $R^2$ et $R^3$ sont du type triorganosilylé, on pourra se reporter aux travaux de JENNE et NIEDENZU (Inorganic Chemistry, 1964, 3, 68), de SUJISHII et WITZ (Journal of American Ceramic Society, 1957, 79, page 2447), ou bien encore de WANNAGAT (Angew International Edition, 3, 1964, page 633).

D'une manière générale, le composé difonctionnel désiré de formule (4) peut être obtenu par action de $BCl_3$ sur

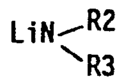 ,

avec des conditions de températures et de rapports molaires convenables.

Le procédé selon l'invention permet de réarranger les molécules et de créer un réseau comportant un polymère dont les propriétés rhéologiques ont été modifiées : augmentation des températures de fusion et de ramollissement, de ce fait le polymère à base de bore et d'azote est thermiquement plus stable lors de la pyrolyse.

Ainsi, par quantité efficace de composé (B), on entend selon l'invention une quantité suffisamment élevée pour que le rendement de la pyrolyse du polymère obtenu soit supérieur au rendement de la pyrolyse du polymère (A) correspondant et n'ayant pas réagi avec le composé (B). Aussi, cette quantité ne doit pas être trop élevée pour ne pas rendre le polymère infusible et/ou insoluble dans les solvants organiques usuels, ceci dans le cas où l'on veut donner ultérieurement au polymère une forme particulière (par exemple : la forme de fibres). Mais, cette quantité de composé (B) peut être plus élevée dans le cas où, par exemple, le polymère (A) est déjà sous forme de fibres, le composé (B) permettant alors de réticuler des fibres pour les rendre infusibles et/ou insolubles.

Cette quantité efficace varie également en fonction des natures du polymère (A) et du composé (B). Cependant, pour fixer les idées, la quantité de composé (B) peut être comprise entre 0,01 et 0,3 équivalent de composé (B) pour 1 équivalent d'un motif de formule (1) ou (2) présent dans le polymère (A) tel que notamment défini ci-dessus. De préférence, cette quantité est comprise entre 0,1 et 0,2 équivalent de composé (B) pour 1 équivalent d'un motif de formule (1) ou (2) présent dans le polymère (A).

Sans vouloir lier l'invention à une théorie scientifique, il est probable que les réactions chimiques mises en jeu au cours de ce procédé soient les suivantes, lorsque le composé (B) répond à la formule (4) décrite ci-dessus :

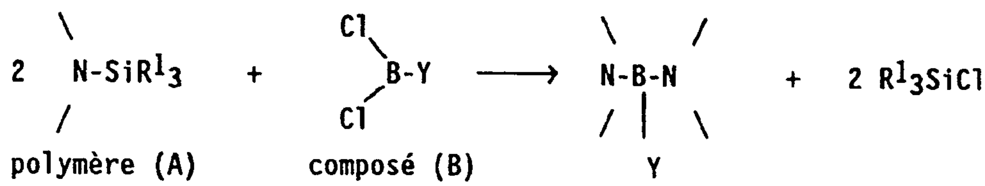
polymère (A)
composé (B)

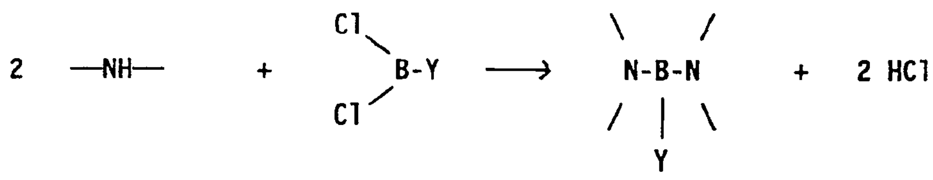

polymère (A) composé (B)

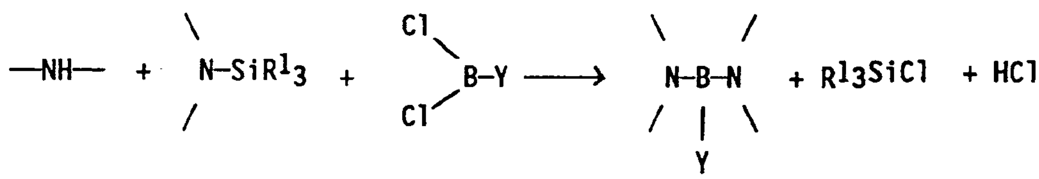

composé (B)

On utilise, de préférence, un polymère (A) contenant par molécule uniquement des motifs de formule (1) : $=N-SiR^1_3$, la production d'acide chlorhydrique dans les réactions chimiques mises en jeu au cours du procédé est ainsi diminuée.

On opère généralement à pression atmosphérique, bien que des pressions inférieures ou supérieures ne soient bien évidemment pas exclues.

Le procédé selon l'invention peut être opéré en masse ou, de préférence, en solution dans un solvant organique du type aprotique (hexane, pentane, toluène, chlorobenzène, etc...) et sous conditions anhydres.

Dans le cas où l'on utilise un composé (B) choisi parmi les produits présentant par molécule au moins un atome de bore sur lequel sont liés directement au moins deux atomes d'halogène, la température du mélange réactionnel est généralement comprise entre 0°C et 50°C, de préférence la température ambiante.

Dans le cas où l'on utilise un composé (B) choisi parmi les produits de formule générale (3), la température du mélange réactionnel est généralement comprise entre 0°C et la température de reflux du milieu réactionnel.

La durée de la réaction peut varier de quelques dizaines de minutes à plusieurs heures, selon les températures mises en jeu, de façon générale la durée est liée à la température du milieu réactionnel : plus la température est élevée, plus la durée de la réaction peut être raccourcie, l'important étant d'aboutir à un polymère fusible et soluble dans la plupart des solvants organiques usuels (hexane, toluène ...), ceci dans le cas où la mise en forme ultérieure du polymère est nécessaire.

A l'issue de la réaction, on sépare le polymère du milieu de réaction, et ceci par tout moyen connu en soi, par exemple par filtration sous atmosphère inerte, ou bien encore par extraction et décantation au moyen notamment d'ammoniac liquide.

Le polymère ainsi récupéré, après éventuellement élimination du solvant (distillation ou autre), puis séchage constitue alors le précurseur polymère qui peut être pyrolysé.

Suivant les conditions de mise en oeuvre du procédé décrit ci-avant, le polymère selon l'invention peut se présenter à température ambiante, sous une forme allant d'une huile visqueuse à très visqueuse jusqu'à l'état solide.

Le polymère selon l'invention, dans le cas où il est mis en forme ultérieurement, après fusion ou solubilisation éventuelle si il est à l'état solide à température ambiante, est directement filable en filaments dont le diamètre peut être compris entre 10 et 40 µm par exemple. Les fibres obtenues sont alors rendues infusibles, avant d'être pyrolysé, notamment par réaction avec le composé (B) décrit ci-dessus, par traitement thermique, par action de l'eau, de l'ammoniac, d'un rayonnement UV, d'un faisceau électrique ou par une combinaison de ces moyens.

Après pyrolyse, les fibres céramiques obtenues peuvent alors servir de structure de renforcement pour des matériaux composites du type céramique/céramique, céramique/métal ou céramique/plastique.

La mise en forme du polymère peut également être faite par moulage pour aboutir finalement à des configurations les plus diverses telles que articles moulés, revêtements de support et autres.

Dans le cas le plus général, on pyrolyse le polymère obtenu à une température comprise entre 300 et 1800°C sous vide, en atmosphère inerte (azote, argon) ou sous ammoniac en vue de sa transformation en céramique à base de nitrure de bore.

Les exemples suivants illustrent l'invention sans en limiter sa portée.

EXEMPLES 1 à 4

Dans un réacteur de 3 litres à double enveloppe, on introduit sous azote une solution de B-trichloroborazine :

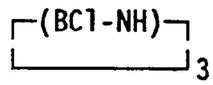 ,

dans le toluène sec.

Après refroidissement à -30°C, on introduit le trichlorure de bore ($BCl_3$), puis l'hexaméthyldisilazane (HMDZ) en une heure environ, en maintenant la température de la masse réactionnelle entre -23°C et -25°C. En fin d'addition, le mélange est laissé sous agitation pendant une heure en laissant la température remonter jusqu'à l'ambiante.

On additionne

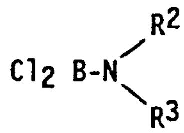 ,

on laisse réagir 2 heures 30 minutes à température ambiante. Après filtration sous azote, la solution limpide obtenue est évaporée pour conduire à une poudre blanche.

Un échantillon de ce produit est pyrolysé soit sous azote, soit sous ammoniac jusqu'à 1000°C selon les conditions opératoires suivantes :

– 25°C à 400°C : 1°C/min (palier d'1 heure)
– 400°C à 1000°C : 3°C/min (palier de 3 heures).

Les tableaux suivants rassemblent les résultats :

TABLEAU 1

| Ex. | $BCl_3$/ $(BCl-NH)_3$ /HMDZ (*) | $Cl_2$-B-N R2 R3 (*) | tR (**) | ≡$SiCH_3$/ NH (***) |
|---|---|---|---|---|
| 1 | 50/ 50 / 300 | $R^2=R^3=SiMe_3$ 0 | 94 | 65/37 |
| 2 | 48/ 48 / 288 | " 4 | 120 | 69,5/30,5 |
| 3 | 45/ 45 / 270 | " 10 | 135 | 70/30 |
| 4 | 45/ 45 / 270 | $R^2=R^3=C_2H_5$ 10 | ~400 | -- |

(*) : rapport molaire
(**) tR : température de ramollissement en °C du polymère obtenu
(***) : rapport molaire à partir d'analyse $^1H$ RMN.

Pour tous ces exemples, la quantité massique de chlore résiduel est inférieure à 10 ppm.

TABLEAU 2

| Exemples | Atmosphère de pyrolyse | Rendement massique de pyrolyse | Aspect de la céramique |
|---|---|---|---|
| 1 | NH3<br>N2 | 35,2<br>32,7 | blanc<br>grisâtre |
| 2 | NH3<br>N2 | 36,8<br>33,4 | blanc<br>grisâtre |
| 3 | NH3<br>N2 | 39,9<br>35,9 | blanc<br>crème |

Les analyses IR, rayons X sur les échantillons pyrolysés à 1000°C montrent que les céramiques obtenues sont essentiellement formées de nitrure de bore BN.

EXEMPLE 5

Dans un ballon de 250 ml séché sous azote, on prépare une solution de 10,7 g de

$$\left[-(BCl-NH)-\right]_3$$

(0,058 mole) dans 200 mL de toluène sec.

Dans un réacteur de 500 ml séché sous azote, on charge 18 g de monométhylamine (0,58 mole) à -10°C et 250 ml de toluène.

La première solution est coulée sur la deuxième à une température variant entre -10°C et 30°C pendant une durée de 45 minutes, puis le mélange est laissé sous agitation pendant une durée de 16 heures.

Après filtration et évaporation on récupère 5 g d'un polymère solide blanc légèrement collant (température de ramollissement est de 50°C). 4 g de ce polymère est dissout dans 50 ml de toluène sec, on ajoute ensuite 0,5 g de $Cl_2B-N(SiMe_3)_2$, on laisse réagir 5 minutes, il y a alors formation d'un gel. Après filtration et évaporation on récupère un solide blanc infusible.

Le taux massique de chlore résiduel est inférieure à 10 ppm.

EXEMPLE 6

Dans un tricol de 3 litres, on introduit, sous azote, 498 g (3,085 moles) d'hexaméthyldisilazane et 1 050 g de toluène sec. On refroidit à -30°C et on introduit en 50 minutes, 144,6 g (1,234 moles), du trichlorure de bore gaz, la température est maintenue à -30°C.

On porte ensuite à reflux durant 17 heures. Un précipité blanc se forme.

Après filtration et évaporation du solvant et des légers, on maintient 1 heure à 90°C sous une pression de 0,120 KPa.

On récupère 112,2 g d'un solide blanc possédant une température de fusion de 110°C. Ce produit est thermolysé sous une pression de 0,053 KPa pendant 4 heures à 200°C.

On récupère un solide blanc de point de ramollissement de 90°C et de point de fusion de 120°C.

Dans un tricol, on introduit, sous azote, 3 g du produit obtenu précédemment dissous dans 50 ml de toluène sec ; on ajoute 1,3 g de $Cl_2B-N(SiMe_3)_2$.

On laisse réagir 5 minutes à température ambiante et on récupère une poudre blanche ayant une température de ramollissement de 210°C.

Le taux massique de chlore résiduel est inférieur à 10 ppm.

EXEMPLE COMPARATIF 7

Dans un réacteur de 2 litres séché sous azote, on introduit 678 g de toluène. On refroidit à une température de -20°C, on introduit 1 mole de $BCl_3$ (117 g).

En maintenant la température entre -16°C et -22°C, on introduit 2,5 moles d'hexaméthyldisilazane (403,5 g). On porte la masse réactionnelle à la température de reflux que l'on maintient pendant 2 heures. On refroidit puis on filtre. On obtient ainsi une solution limpide.

Après évaporation du solvant et des légers, on maintient la masse à 90°C pendant 1 heure sous une pression de 0,02 KPa.

On récupère un produit légèrement collant de température de ramollissement de 50°C et de fusion de 80°C.

EXEMPLES 8 A 10

On procède comme dans l'exemple comparatif 7, sauf que la solution limpide obtenue après filtration, mais avant évaporation, est introduite dans un réacteur de 2 litres séché sous azote.

On ajoute une solution de B-trichloroborazine dans 242 g de toluène dans ce réacteur.

On porte à reflux que l'on maintient 2 heures. La solution reste limpide.

Puis on évapore le toluène, le triméthylchlorosilane et l'hexaméthyldisilazane en excès.

La masse réactionnelle est maintenue à une température de 90°C pendant 1 heure sous une pression de 0,02 KPa.

On obtient de la poudre dont les températures de ramollissement ($t_R$) et de fusion ($t_F$) en fonction du nombre de moles (n) de B-trichloroborazine ajouté sont les suivantes :

| | n | $t_R$ | $t_F$ |
|---|---|---|---|
| exemple 8 | 0,1 | <5 | 145 |
| exemple 9 | 0,05 | 65 | 110 |
| exemple 10 | 0,025 | 60 | 90 |

## Revendications

1. Procédé de réticulation de polymère à base de bore et d'azote, procédé caractérisé en ce que ledit polymère (A) contenant par molécule au moins un motif choisi parmi les formules :

$$=N-SiR^1_3 \quad (1)$$

$$\text{et } -NH- \quad (2),$$

formules dans lesquelles $R^1$, identique ou différent, représente un radical hydrocarboné, est mis en contact avec une quantité efficace de composé (B) choisi parmi les produits présentant par molécule au moins un atome de bore sur lequel sont liés directement au moins deux atomes d'halogène et les produits ayant pour formule générale (3) : $(BX - NR)_n$, formule (3) dans laquelle l'indice n est un entier compris entre 3 et 10, de préférence n est égal à 3, R représente l'atome d'hydrogène, un radical hydrocarboné, un radical organosilylé ou hydrogénoorganosilylé et X représente un atome d'halogène.

2. Procédé selon la revendication 1, caractérisé en ce que l'atome d'halogène présent dans le composé (B) est le chlore.

3. Procédé selon la revendication 1 ou 2, caractérisé en ce que le composé (B) répond à la formule :

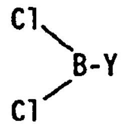 (4)

dans laquelle Y représente

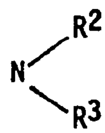 ,

les radicaux $R^2$ et $R^3$, identiques ou différents, étant choisis parmi l'atome d'hydrogène, les radicaux hydrocarbonés et les radicaux organosilylés et hydrogénoorganosilylés.

4. Procédé selon la revendication 1 ou 2, caractérisé en ce que le composé (B) répond à la formule (3) dans laquelle R est l'hydrogène.

5. Procédé selon l'une des revendications précédentes, caractérisé en ce que ledit polymère (A) contient par molécule uniquement des motifs de formule (1) : $=N-SiR^1_3$.

6. Procédé selon l'une des revendications précédentes, caractérisé en ce que la quantité de composé (B) est comprise entre 0,01 et 0,3 équivalent de composé (B) pour 1 équivalent d'un motif de formule (1) ou (2) présent dans le polymère (A).

7. Procédé selon l'une des revendications précédentes, caractérisé en ce que la quantité de composé (B) est comprise entre 0,1 et 0,2 équivalent de composé (B) pour 1 équivalent d'un motif de formule (1) ou (2) présent dans le polymère (A).

8. Procédé selon l'une des revendications précédentes, caractérisé en ce que ledit procédé est opéré en solution dans un solvant organique de type aprotique et sous conditions anhydres.

9. Utilisation d'un polymère susceptible d'être obtenu par un procédé selon l'une quelconque des revendications précédentes pour la préparation de poudres, de fibres, de revêtements, d'articles moulés céramiques à base de nitrure de bore, par pyrolyse dudit polymère.

Office européen des brevets

# RAPPORT DE RECHERCHE EUROPEENNE

Numero de la demande

EP 91 40 0936

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 307 259 (RHONE-POULENC CHIMIE)<br>--- | | C 08 G 79/08<br>C 04 B 35/58 |
| D,A | EP-A-0 364 323 (RHONE-POULENC CHIMIE)<br>--- | | |
| A | US-A-4 578 283 (S.W. KIRTLEY et al.)<br>--- | | |
| D,A | EP-A-0 278 734 (ULTRASYSTEMS DEFENCE AND SPACE, INC.)<br>--- | | |
| A | GB-A-2 163 761 (I. TANIGUCHI et al.)<br>--- | | |
| A | CERAMIC ENGINEERING AND SCIENCE PROCEEDINGS, vol. 9, nos. 7-8, août 1988, pages 993-1000, US; K.J.L. PACIOREK et al.: "Boron nitride preceramic polymer studies"<br>----- | | |
| | | | **DOMAINES TECHNIQUES RECHERCHES (Int. Cl.5)** |
| | | | C 08 G<br>C 04 B |

Le présent rapport a été établi pour toutes les revendications

| Lieu de la recherche | Date d'achèvement de la recherche | Examinateur |
|---|---|---|
| LA HAYE | 28-06-1991 | STIENON P.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)